(19) Europäisches Patentamt

European Patent Office

Office européen des brevets

(11) **EP 1 005 031 A2**

(12) **EUROPEAN PATENT APPLICATION**

(43) Date of publication:
31.05.2000 Bulletin 2000/22

(51) Int. Cl.7: **G11B 7/12**

(21) Application number: **99203897.6**

(22) Date of filing: **23.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.11.1998 JP 33510298**

(71) Applicant:
**SHARP KABUSHIKI KAISHA**
**Osaka-shi, Osaka-fu 545-0013 (JP)**

(72) Inventors:
• **Kitamura, Kazuya**
  **Tenri-shi, Nara (JP)**
• **Yamaguchi, Takeshi**
  **Sakai-shi, Osaka (JP)**
• **Kurata, Yukio**
  **Tenri-shi, Nara (JP)**

(74) Representative:
**Lips, Hendrik Jan George, Ir.**
**HAAGSCH OCTROOIBUREAU**
**Breitnerlaan 146**
**2596 HG Den Haag (NL)**

(54) **Multi-beam optical pickup apparatus appropriately controlling distance between objective lens and optical information recording medium.**

(57) A multi-beam optical disk apparatus that can reduce the spot diameter of all of a plurality of light beams directed to an optical information recording medium (6) includes: a light source (7); a diffraction element (8, 9) diffracting light emitted from the light source (7) towards the optical information recording medium (6) to produce a plurality of light beams; an objective lens (5) focusing the plurality of light beams on the optical information recording medium (6); a light receiving unit (10) receiving reflected light of the plurality of light beams from the optical information recording medium (6); and a control unit connected to the light receiving unit (10) to control the position of the objective lens (5) so that the distance between the optical information recording medium (6) and the objective lens (5) is at least the shorter one of the best image point distance of a light beam having a diffraction order of zero and the best image point distance of a light beam having the highest diffraction order and not more than the longer one of the best image point distance of a light beam having a diffraction order of zero and the best image point distance of a light beam having the highest diffraction order according to a signal from the light receiving unit (10).

FIG.1

EP 1 005 031 A2

**Description**

BACKGROUND OF THE INVENTION

Field of the Invention

The present invention relates to a multi-beam optical pickup apparatus that records and reproduces information simultaneously with respect to a plurality of tracks of an optical information recording medium, and a focus control method thereof Particularly, the present invention relates to a multi-beam optical pickup apparatus that reduces the spot diameter of all the plurality of light beams directed onto an optical information recording medium, and a focus control method thereof.

Description of the Background Art

During the past several years, efforts have been made to increase the reproduction speed in an information recording/reproduction apparatus employing an optical information recording medium (optical disk) corresponding to the increase in the amount of data to be recorded/reproduced. A multi-beam optical pickup has been proposed that generates a plurality of beams with the optical pickup that carries out information reading, and that reads out simultaneously information from a plurality of tracks of an optical disk. Such a multi-beam optical head using a diffraction grating is disclosed in Japanese Patent Laying-Open No. 1-248329.

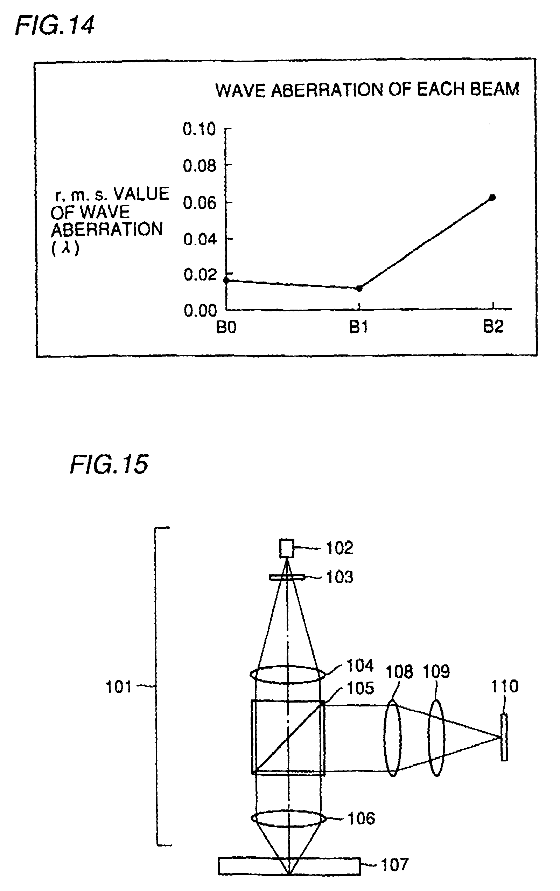

Referring to Fig. 15, a conventional multi-beam optical pickup 101 includes a semiconductor laser 102 which is the light source, a diffraction grating 103 that divides the light emitted from semiconductor laser 102 into a plurality of beams, a collimator lens 104 rendering the plurality of beams parallel, a beam splitter 105 provided at a position receiving the plurality of beams passing through collimator lens 104, an objective lens 106 provided at a position so as to receive the plurality of beams passing through beam splitter 105 and focus the beams an a disk 107, a collective lens 108 and a cylindrical lens 109 provided at a position to receive the beam that is reflected at disk 107 and beam splitter 105 and that corresponds to the information recorded in disk 107, and a photodetector 110 provided at a position to receive the beam passing through cylindrical lens 109.

For example, when information is to be read out from an optical disk by means of three beams simultaneously, the incident light is divided into three beams by diffraction grating 103. The three beams include the zero order diffracted light (referred to as "main beam" hereinafter) and the ± first order diffracted light (referred to as "sub beam" hereinafter) at both sides thereof. The three beams are directed to optical disk 107. Photodetector 110 uses the main beam to detect a tracking error signal (referred to as "RES (Radial Error Signal)" hereinafter) and a focusing error signal (referred to as "FES (Focus Error Signal)" hereinafter) to detect the total of three reproduction RF (Radial Frequency) signals by the main beam and the sub beams. The RES is obtained according to the sample servo system.

As an optical pickup apparatus that directs a plurality of light beams to an optical disk, a 3-beam system optical pickup apparatus that uses the three beam method for tracking control disclosed in Japanese Patent Laying-Open No. 1-269239 is known in addition to the multi-beam optical pickup.

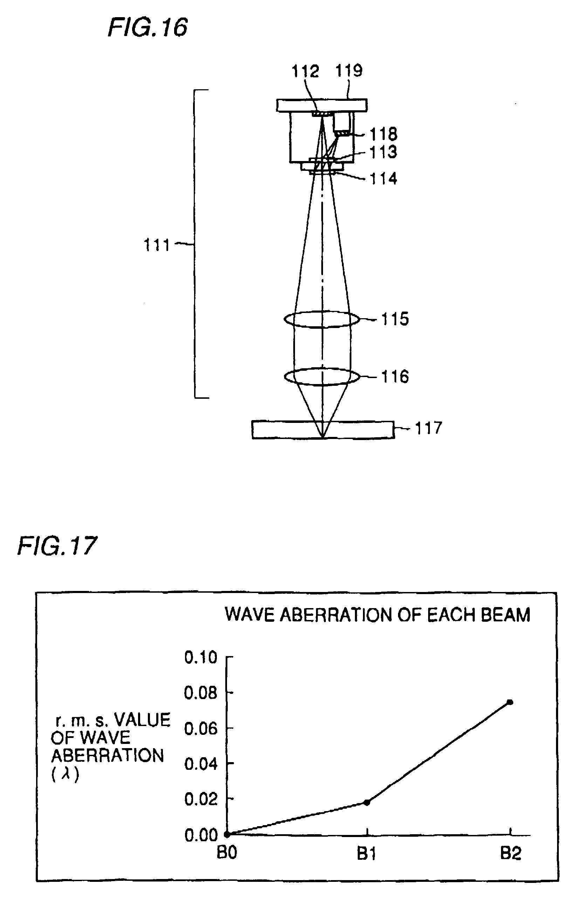

Referring to Fig. 16, a 3-beam system optical pickup apparatus 111 includes a semiconductor laser 112 which is a light source, a diffraction grating 113 that divides the light emitted from semiconductor laser 112 into a plurality of beams, a hologram element 114 passing the plurality of beams as zero order diffracted light, a collimator lens 115 rendering the plurality of beams passing through hologram element 114 parallel, an objective lens 116 provided at a position to focus the plurality of beams passing through collimator lens 115 onto a disk 117, and an internal light receiving unit 118 receiving a light beam reflected from disk 117 and passing through objective lens 116, collimator lens 115 and hologram element 114, and corresponding to the information recorded in disk 117.

The light reflected from disk 117 includes a signal for tracking, a signal for focusing, and a reproduced RF signal. The light reflected at disk 117 is divided into zero order diffracted light and first order diffracted light at hologram element 114. The first order diffracted light enters internal light receiving unit 118. Internal light receiving unit 118 includes an internal light receiving unit for tracking, an internal light receiving unit for focusing, and a light receiving unit for RF, all not depicted. Semiconductor laser 112, diffraction grating 113, hologram element 114 and internal light receiving unit 118 are formed integrally as a hologram laser unit 119. The tracking by this apparatus is carried out using the three beam system.

In the multi-beam optical pickup apparatus 101 that reads out information from a plurality of tracks using a plurality of beams as shown in Fig. 15, the interval Pd between each beam on disk 107 is equal. The relationship between interval Pd and interval Ph of the internal light receiving units forming photodetector 110 is:

$$Pd = Ph \cdot fOL/fCL$$

where fOL is the focal length of objective lens 106, and fCL is the focal length of collimator lens 104. In order to read as many beams as possible at the same time, interval Pd should be reduced to allow more beams. Interval Ph must be set smaller or focal length fCL must be set greater in order to reduce interval Pd. However, interval Ph cannot be set smaller due to restriction in the photoelectric conversion sensitivity and the assembly accuracy of the photodetector. If the focal length fCL is increased, the effective numerical aperture of collimator Lens 104 is reduced to result in poor light usage efficiency. Thus, it is required to introduce as many light beams as possible in the permitted image width on disk 107 that is defined by the aberration of objective lens 106, collimator lens 104, diffraction grating 103, and the like.

In the conventional multi-beam optical pickup apparatus 101, focusing is carried out by the Foucault method. More specifically, focusing is established on the best image point of the zero order diffracted light (main beam) of diffraction grating 103. The wave aberration of each beam thereof is shown in Fig. 17.

If the criterion value (Marechal Criterion) of each beam wave aberration (r. m. s. value) is set to 0.07 $\lambda$, the wave aberration value of the $\pm$ second order diffracted light will exceed the criterion value if the assembly tolerance of each component is included. Therefore, not all the beams could be read out.

Furthermore, the focusing servo is difficult since the tolerance of focusing is small.

Since focus is achieved on the best image point of the main beam in the conventional multi-beam optical pickup apparatus 101, the spot diameter of particularly a high order diffracted light could not be made small enough due to the shift of the best image point of the sub beam caused by image plane curvature. Thus, there was a problem that the jitter property is significantly affected adversely.

3-beam system optical pickup apparatus 111 of Fig. 16 has similar problems since focusing is established on the best image point of the main beam.

SUMMARY OF THE INVENTION

In view of the foregoing, an object of the present invention is to provide a multi-beam optical disk apparatus that can reduce the spot diameter of all the plurality of light beams directed to an optical information recording medium.

Another object of the present invention is to provide a focus control method employed in the multi-beam optical disk apparatus that can reduce the spot diameter of all the plurality of light beams directed to an optical information recording medium.

According to an aspect of the present invention, a multi-beam optical pickup apparatus includes a light source, a diffraction element diffracting light emitted from the light source towards an optical information recording medium to produce a plurality of light beams, an objective lens focusing the plurality of light beams on the optical information recording medium, a light receiving unit receiving reflected light of the plurality of light beams from the optical information recording medium, and a control unit connected to the light receiving unit to control the position of the objective lens so that the distance between the optical information recording medium and the objective lens is at least the shorter one of the best image point distance of a light beam having a diffraction order of zero and the best image point distance of a light beam having the highest diffraction order and not more than the longer one of the best image point distance of a light beam having a diffraction order of zero and the best image point distance of a light beam having the highest diffraction order according to a signal from the light receiving unit.

In the present specification, "best image point distance" refers to the distance between the objective lens and the optical information recording medium when the best image point of the light beam (the point where the wave aberration is smallest) is located on the optical information recording medium.

By setting the position of the objective lens as described above, there will be no light beam having an extremely great wave aberration. Therefore, the overall spot diameter can be reduced to allow more beams. Thus, high speed read out is allowed.

Preferably, the light receiving unit includes a first focus error detection light receiving unit detecting at least one focus error out of the reflected light of light beams other than the zero order light beam, and an RF light receiving unit receiving the reflected light of the plurality of light beams to detect an RF signal. The control unit is connected to the first focus error detection light receiving unit to control the position of the objective lens so that the distance between the object lens and the optical information recording medium is equal to the best image point distance of any one of the light beams corresponding to the reflected light received at the first focus error detection light receiving unit according to a signal from the first focus error detection light receiving unit.

Further preferably, the first focus error detection light receiving unit includes a second focus error detection light receiving unit detecting focus error of a light beam lower by one order than the highest order. The control unit is connected to the second focus error detection light receiving unit to control the position of the objective lens so that the distance between the objective lens and the optical information recording medium is equal to the best image point distance of the light beam of one order lower than the highest order according to a signal from the second focus error detection light receiving unit.

The image plane curvature increases abruptly as a function of a higher order of diffraction. By setting the position of the objective lens as described above on the basis of the best image point distance of a light beam lower by one order than the highest order, the wave aberration of each light beam can be reduced entirely. Therefore, the overall spot diameter can be reduced to allow more beams. Thus, high speed read out is allowed.

According to a further aspect of the present invention, a focus control method is used in a multi-beam optical pickup apparatus including a light source, a diffraction element diffracting the light emitted from the light source towards an optical information recording medium to generate a plurality of light beams, an objective lens focusing the plurality of light beams on the optical information recording medium, a light receiving unit receiving reflected light of the plurality of beams from the optical information recording medium, and a control unit connected to the light receiving unit to control the position of the objective lens according to a signal from the light receiving unit. The focus control method Includes the steps of receiving reflected light of the plurality of light beams from an optical information recording medium, and controlling the position of the objective lens so that the distance between the optical information recording medium and the objective lens is at least the shorter one of the best image point distance of a light beam having a diffraction order of zero and the best image point distance of a light beam having the highest diffraction order and not more than the longer one of the best image point distance of a light beam having a diffraction order of zero and the best image point distance of a light beam having the highest diffraction order according to a signal from the light receiving unit.

By setting the position of the objective lens as described above, there will be no light beam of which the wave aberration is significantly great. Therefore, the overall spot diameter can be reduced to allow more beams. Therefore, high speed read out is allowed.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a diagram showing a structure of a multi-beam optical pickup apparatus according to a first embodiment of the present invention.
Fig. 2 shows an arrangement of an internal light receiving unit of Fig. 1.
Fig. 3 shows the concept of the hologram element pattern of Fig. 1.
Figs. 4A-4C show the concept of a light beam spot shape at an FES light receiving unit of the first embodiment.
Fig. 5 is a diagram showing the FES curve of the first embodiment.
Fig. 6 shows an example of the best image point of each beam of the first embodiment.
Fig. 7 shows an example of the relationship between each beam and wave aberration of the first embodiment.

Fig. 8 is an enlarged view of the FES curve of the first embodiment.
Fig. 9 shows another example of the best image point of each beam of the first embodiment.
Fig. 10 shows another example of the relationship between each beam and wave aberration of the first embodiment.
Fig. 11 shows a structure of a multi-beam optical pickup apparatus according to a second embodiment of the present invention.
Fig. 12 shows an arrangement of an internal light receiving unit of Fig. 11.
Fig. 13 shows the concept of the hologram element pattern of Fig. 11.
Fig. 14 shows an example of the relationship between each beam and wave aberration of the second embodiment.
Fig. 15 shows a structure of a conventional multi-beam optical pickup apparatus.
Fig. 16 shows a structure of a conventional optical pickup apparatus.
Fig. 17 shows the relationship between each beam and wave aberration of the conventional multi-beam optical pickup apparatus.

DESCRIPTION OF THE PREFERRED EMBODIMENTS

The mechanism of a multi-beam optical pickup apparatus of the present invention will be described here.

As mentioned before, focusing is achieved on the best image point of the main beam in a conventional multi-beam optical pickup apparatus 101. It was therefore not possible to reduce the spot diameter sufficiently in particularly high order diffracted light due to the shift of the best image point of the sub beam caused by image plane curvature. For the purpose of solving this problem, the target point of focusing (focusing point) is shifted from the best image point of the main beam (the point where exact focus of the main beam is achieved on the optical disk). More specifically, control is provided so that the objective lens functioning to gather the light beams is located at a predetermined position between the position to focus the main beam on the optical information recording medium and the position to focus the sub beam of the highest order. In the first embodiment, the best image point of the main beam is offset so as to shift the focusing point between the main beam best image point and the sub beam best image point located at the outermost side. In the second embodiment, focus is established at the best image point of the sub beam. Accordingly, aberration generated in the high order diffracted light can be suppressed.

Embodiments employing the mechanism of the present invention will be described in detail hereinafter.

First Embodiment

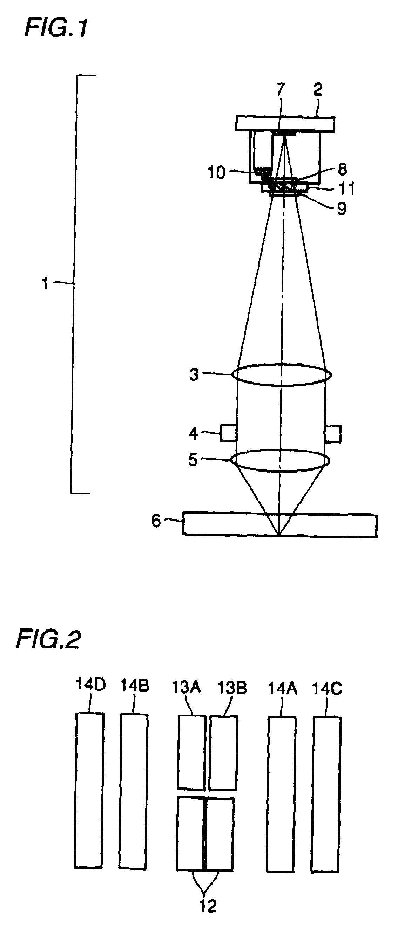

Referring to Fig. 1, a multi-beam optical pickup apparatus 1 of 5 beams according to the first embodiment of the present invention includes a hologram laser unit 2 incorporating a light source, a collimator lens 3 rendering the plurality of beams emitted from hologram laser unit 2 parallel, an aperture 4 receiving the plurality of beams passing through collimator lens 3, an objective lens 5 focusing the plurality of beams passing through aperture 4 on an optical information recording medium (optical disk) 6, and a control unit (not shown) controlling the position of objective lens 5.

Hologram laser unit 2 includes a semiconductor laser 7 which is the light source, a diffraction grating 8 dividing the light emitted from semiconductor laser 7 into a plurality of beams, a hologram element 9 diffracting the reflected light from disk 6, an internal light receiving unit 10 receiving light diffracted at hologram element 9, and hologram glass 11 formed at a position facing collimator lens 3. Diffraction grating 8 is formed at the semiconductor laser 7 side plane of hologram glass 11. Hologram element 9 is formed at the disk 6 side plane of hologram glass 11.

Internal light receiving unit 10 is formed of a plurality of light receiving units (an FES light receiving unit 12, an RES light receiving unit 13 and an RF light receiving unit 14) as shown in Fig. 2.

The light beam emitted from semiconductor laser 7 is divided into five beams by diffraction grating 8, i.e., the zero order diffracted light (main beam B0), + first order diffracted light (B1 +), - first order diffracted light (B1 -), + second order diffracted light (B2 +), and - second order diffracted light (B -). The five light beams pass through collimator lens 3 and objective lens 5 to be focused on disk 6. In the present embodiment, the employed objective lens 5 has a focal length of 2.8 mm and a numerical aperture of 0.6. The employed collimator lens 3 has a numerical aperture of 0.09.

The reflected light from disk 6 advances along a path opposite to that described above. More specifically, the reflected light passes though objective lens 5 and collimator lens 3 to be diffracted at hologram element 9. Only the first order diffracted light is directed towards internal light receiving unit 10 (RF light receiving unit 14, FES light receiving unit 12, and RES light receiving unit 13). At internal light receiving unit 10, a tracking error signal (RES signal), a focusing error signal (FES), and an RF signal are detected. Objective lens 5 is driven by an actuator and the like not shown according to the FES and RES. In the present embodiment, the FES and RES are detected by the Foucault method and the push-pull method, respectively, using the zero order diffracted light (B0).

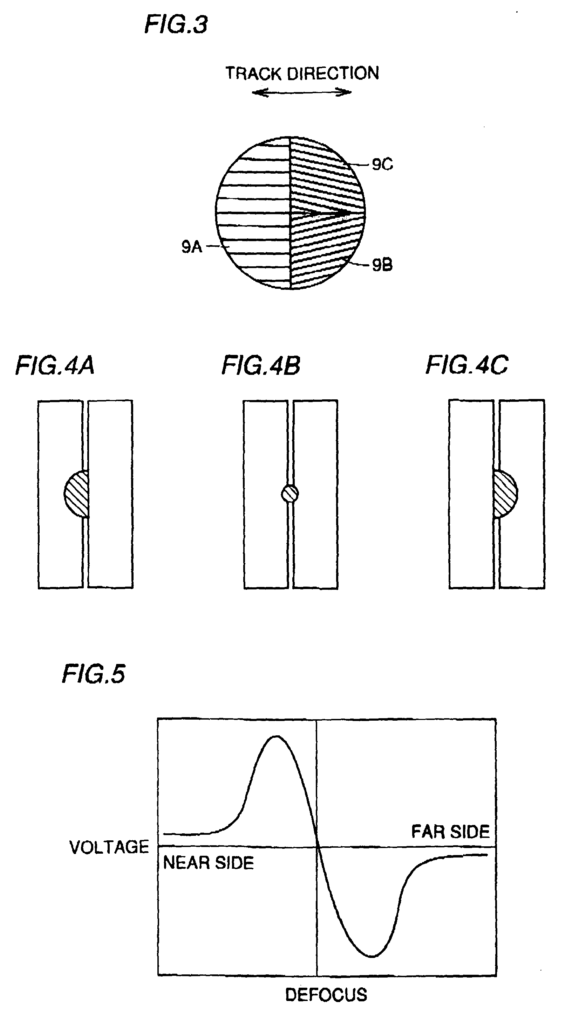

The hologram pattern of hologram element 9 is shown in Fig. 3. The hologram pattern will be described in relationship with internal light receiving unit 10 of Fig. 2.

The first order diffracted light of the main beam (B0) diffracted by a hologram pattern 9A enters FES light receiving unit 12. The first order diffracted light (B1 +, B1 -) diffracted by a hologram pattern 9B enters RES light receiving unit 13A. The first order diffracted light diffracted by a hologram pattern 9C enters RES light receiving unit 13B. The RF signals of sub beams B1 +, B1 -, B2 + and B2 - are detected by RF light receiving units 14A, 14B, 14C and 14D, respectively. The RF signal of the main beam (B0) is detected according to the sum of the light received at RES light receiving units 13A and 13B.

In multi-beam optical pickup apparatus 1 of the above structure, the spat diameter of each sub beam (B1, B2) must be reduced sufficiently as well as that of the main beam (B0) on disk 6 in order to read out RF signals of 5 tracks or in order to detect the RES from the 5 beams directed to optical disk 6. The location of the target point of focusing is critical. Setting that target point will be described hereinafter.

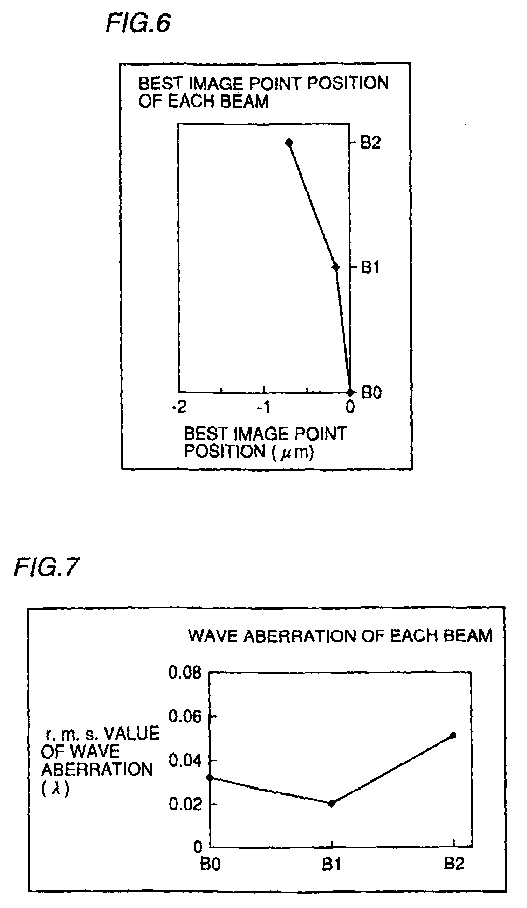

FES light receiving unit 12 is arranged in a divided manner so that the reflected light of the main beam (B0) from optical information recording medium 6 is focused on the divisional line when the distance between objective lens 5 and optical information recording medium 6 is defined so as to focus the main beam (B0) on optical information recording medium 6. The shape of the light received at FES light receiving unit 12 varies. More specifically, the spot shape as shown in Fig. 4A is obtained when disk 6 is too close to the focus position. The spot shape is as shown in Fig. 4C when disk 9 is too far. The spot shape is as shown in Fig. 4B when the focus position is correct. The FES curve corresponding to such spot shapes is shown in Fig. 5. The zero cross point of Fig. 5 corresponds to the best image point (the point where wave aberration is smallest) of the main beam (B0) entering FES light receiving unit 12. The focus servo is driven generally centered about this point. More specifically, the distance between objective lens 5 and optical information recording medium 6 is controlled so that the main beam (B0) is directed to optical information recording medium 6 at the best image point. In the following description, "best image point distance" refers to the distance between objective lens 5 and optical information recording medium 6 when the best image point of a beam (main beam, sub beam) is located on optical information recording medium 6.

Referring to Fig. 6, the relationship of the best image points will be described when the beam distance of respective beams of the main beam (B0) and the sub beam (B1 +, B1 - B2 +, B2 -) on disk 6 is set to 14 µm. Because of the image plane curvature of objective lens 5 and the astigmatism of diffraction grating 8, the best image point moves towards objective lens 5 as the beam position is located farther away from main beam B0. The position of the best image points of sub beams B2 + and B2 - is shifted approximately 0.72 μm than that of main beam B0. In other words, the best image point of the second order diffracted light is appreciably deviated from the best image point of the main beam when focusing is carried out corresponding to the best image point of main beam B0.

In view of the foregoing, offset is applied towards objective lens 5 with respect to the best image point of the main beam In the present embodiment. More specifically, objective lens 5 is positioned so that the distance between objective lens 5 and optical information recording medium 6 becomes smaller than the best image point distance of main beam B0, and larger than the best image point distance of the sub beam of the highest order.

Referring to Fig. 7, the relationship between each beam and wave aberration will be described when an offset of 0.36 μm is set towards objective lens 5 (objective lens 5 shifted towards optical information recording medium 6). By this offset, the wave aberration (r. m. s. value: root mean square value) of diffracted light up to the ± second order becomes lower than the criterion value (Marechal Criterion) of 0.07 λ. Therefore, the spot diameter for all the five beams can be reduced up to the diffraction limitation. The focusing servo is implemented on the basis of a position (0.72 *1/2) μm closer to objective lens 5 than the best image point of main beam B0. In other words, the focusing servo is implemented with objective lens 5 located closer towards optical information recording medium 6 by 0.36 μm. Accordingly, the wave aberration of all the 5 beams can be suppressed equally to allow reduction of the spot diameter. Thus, readout can be carded out at a higher speed.

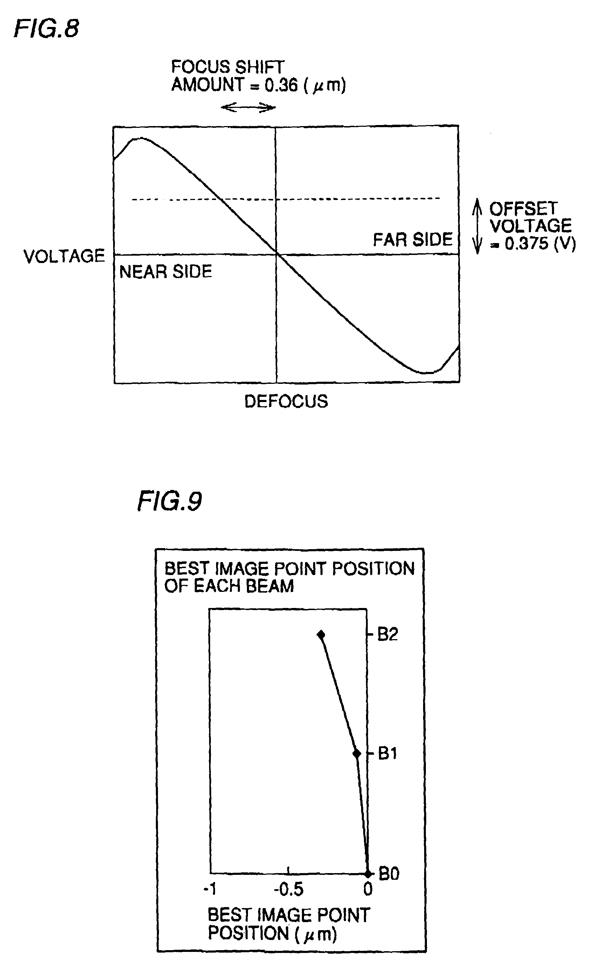

In order to offset to the target point of focusing, an offset voltage is to be applied at the FES curve shown in Fig. 5, for example. More specifically, in order to obtain offset of 0.36 μm for the focus shift amount, the voltage corresponding to 0.36 μm on the FES curve, i.e., 0.375V, is to be applied as the offset voltage as shown in Fig. 8. In this case, the tolerable width of focusing on the basis of the above position (position offset by 0.36 μm) is approximately ± 0.5 μm for each beam. The aforementioned offset voltage vanes depending upon the arrangement of the photodetector, aberration of the optical system, efficiency, and the like.

Referring to Fig. 9 based on another numeric value, the relationship of the best image point position when the beam interval of the main beam B0) and the sub beams (B1 +, B1 -, B2 +, B2 -) on disk 6 is set to 9.0 μm will be described. Because of the image plane curvature of objective lens 5 and the astigmatism of diffraction grating 8, the best image point is shifted towards objective lens 5 as the beam position is located farther away from main beam B0. The position of the best image point for sub beams B2 + and B2 - is shifted approximately 0.29 μm than that of main beam B0.

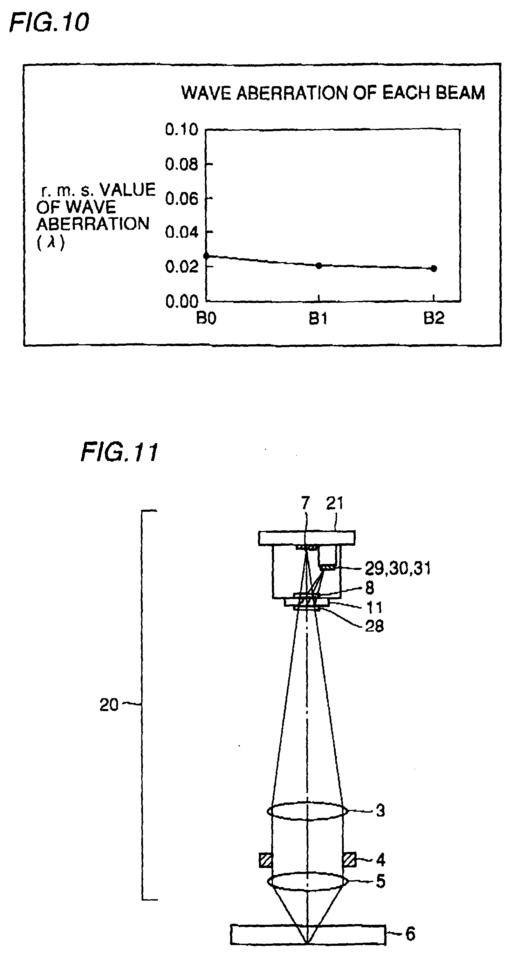

The relationship between each beam and wave aberration when an offset of 0.15 μm is implemented towards objective lens 5 for the best image point of main beam B0 will be described with reference to Fig. 10. By this offset, the wave aberration (r. m. s. value) of the diffracted light up to the ± second order becomes sufficiently smaller than the criterion value (Marechal Criterion) of 0.07 λ. More specifically, the focusing servo is implemented on the basis of a position (0.29*1/2) μm closer to objective lens 5 than the best image point of main beam B0. Accordingly, the wave aberration of all the five beams can be suppressed equally to allow reduction of the spot diameter. Therefore, readout at higher speed is possible. It is moat desirable to achieve focus at the center position between the best image point of main beam B0 and the best image point of the outermost sub beam (B2 +, B2 -). However, sufficient effect can be achieved as long as focusing is established between the main beam (B0) and the outermost sub beam (B2 +, B2 -) even when the focus is slightly shifted caused by variation in the focusing servo and assembly error.

In order to establish focus offset 0.15 μm towards objective lens 5 from the best image point of main beam B0, the position of FES light receiving unit 12 is moved farther away from hologram element 9 along the optical axis direction by an amount L corresponding to 0.15 μm on disk 6. More specifically, FES light receiving unit 12 is arranged so that reflected light of main beam B0 from optical information recording medium 6 is not focused on the divisional line when the distance between objective lens 5 and optical information recording medium 6 corresponds to the best image point distance of main beam B0. Since the vertical magnification of the present optical system is $0.154^2$ = 0.0237, that amount L is set forth in the following.

$$L = 0.15/0.0237 = 6.3 \ \mu m$$

Therefore, focus offset can be implemented without reducing the dynamic range of the FES curve.

As an alternative method, the beam spot position of FES light receiving unit 12 is shifted a predetermined amount in a direction orthogonal to the divisional line by rotating hologram element 9 intra-plane. Here, the offset amount is selected so that zero crossing is established in the FES curve when focus offset is implemented 0.15 μm towards objective lens 5 from the best image point of main beam B0. Also, FES light receiving unit 12 itself can be shifted a predetermined amount in a direction orthogonal to the divisional line intra-plane instead of rotating hologram element 9.

According to the present embodiment, the overall wave aberration of the beam becomes smaller, so that the entire spot diameter of the beam can be reduced. Therefore, the jitter characteristic of each beam can be made favorable. High speed readout is allowed by increasing the number of beams.

The present embodiment is described where there are 5 beams. The present embodiment is applicable even when the number of beams is altered, and the above-described effect can be achieved.

Second Embodiment

Referring to Fig. 11, a multi-beam optical pickup apparatus 20 of 5 beams according to a second embodiment of the present invention includes a hologram laser unit 21 incorporating a light source, a collimator lens 3 rendering the plurality of beams emitted from hologram laser unit 21 parallel, an aperture 4 receiving the plurality of beams passing through collimator lens 3, an objective lens 5 focusing the plurality of beams passing through aperture 4 onto an optical information recording medium (optical disk) 6, and a control unit (not shown) controlling the position of objective lens 5.

Hologram laser unit 21 includes a semiconductor laser 7 which is the light source, a diffraction grating 8 dividing the light emitted from semiconductor laser 26 into a plurality of beams, a hologram element 28 diffracting reflected light from disk 6, a RES light receiving unit 29, a FES light receiving unit 30 and a RF light receiving unit 3 receiving light diffracted at hologram element 28, and hologram glass 11 formed facing collimator lens 3. Diffraction grating 8 is formed at the semiconductor laser 7 side plane of hologram glass 11. Hologram element 28 is formed at the disk 6 side plane of hologram glass 11.

The light beam emitted from semiconductor laser 26 is separated into 5 beams by diffraction grating 27, i.e., the zero order diffracted light (main beam B0), and sub beams of + first order diffracted light (B1 +), - first order diffracted light (B1 -), + second order diffracted light (B2 +) and - second order diffracted light (B2 -). The five beams pass through collimator lens 3 and objective lens 5 to be focused on disk 6.

The reflected light from disk 6 advances a path opposite to that described above. More specifically, the reflected light passes through objective lens 5 and collimator lens 3. The light beam towards hologram laser unit 21 is diffracted at hologram element 28 that is divided into three regions. Only the first order diffracted light enters RES light receiving unit 29, FES light receiving unit 30 and RF signal light receiving unit 31.

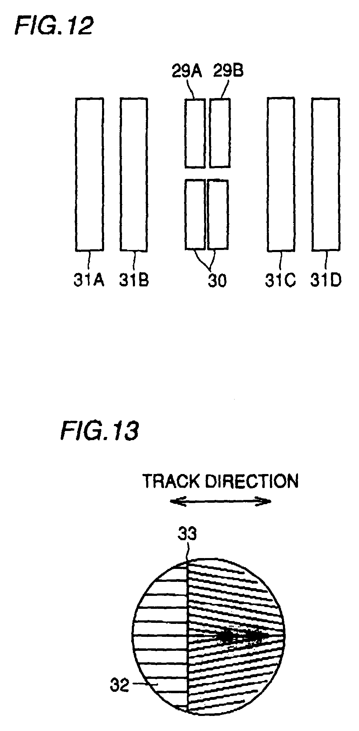

FES light receiving unit 30, RES light receiving units 29A and 29B, and RF light receiving units 31A-31D are arranged as shown in Fig. 12. RF light receiving units 31A-31D receive the RF signal of respective sub beams. The RF signal of the main beam is read out from the signal applied to RES signal units 29A and 29B.

Referring to Fig. 13, a hologram pattern 32 of hologram element 28 will be described. The light passing through hologram pattern 32 is received at FES light receiving unit 30. The boundary line 33 of hologram pattern 32 is formed to match the spot center of the sub beam (B1 +) of the + first order diffracted light. Accordingly, FES light receiving unit 30 can obtain a focus signal by the Foucault method using the sub beam (B1 +) of the + first order diffracted light.

In multi-beam optical pickup apparatus 20 of the above-described structure, the focus servo is controlled using the sub beam (B1 +) of the + first order diffracted light. More specifically, control is provided so that the distance between objective lens 5 and optical information recording medium 6 is set to the best image point distance of the sub beam of the + first order diffracted light.

The wave aberration of each beam thereof will be described with reference to Fig. 14. The wave aberration (r. m. s. value) of the diffracted light up to the outermost sub beams (B2 +, B2 -) becomes lower than the criterion value (Marechal Criterion) 0.07 $\lambda$. The beam spot is reduced up to the diffraction limitation for all the five beams. Therefore, readout can be carried out at a higher speed.

Although 5 beams are employed in the present embodiment, the present embodiment is applicable even for a different number of beams to obtain the advantage of the present invention. The beam subjected to focusing is set appropriately according to the number of beams. However, it is desirable that the focus servo is implemented using a sub beam one order lower than the highest order. This is because the overall aberration of respective beams can be reduced by using the sub beam of one lower order since the image plane curvature is increased suddenly at the higher order side as shown in Fig. 6.

In the multi-beam optical pickup apparatus of the present embodiment, the wave aberration can be suppressed for the sub beam as well as for the main beam to allow sufficient reduction of the spot diameter. Therefore, the jitter characteristics of each beam can be set favorable. By increasing the number of beams, readout at a higher speed can be carried out.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A multi-beam optical pickup apparatus comprising:

   a light source (7),
   a diffraction element (8, 9, 28) diffracting light emitted from the light source (7) towards an optical information recording medium (6) to generate a plurality of light beams,
   an objective lens (5) focusing said plurality of light beams on said optical information recording medium (6),

a light receiving unit (10, 29, 30, 31) receiving reflected light of said plurality of light beams from said optical information recording medium (6), and

a control unit connected to said light receiving unit (10, 29, 30, 31,) and controlling a position of said objective lens (5) so that a distance between said optical information recording medium (6) and said objective lens (5) is at least the shorter one of a best image point distance of a light beam having a diffraction order of zero and a best image point distance of a light beam having the highest diffraction order and not more than the longer one of said best image point distance of a light beam having a diffraction order of zero and said best image point distance of a light beam having the highest diffraction order, according to a signal from said light receiving unit (10, 29, 30, 31).

2. The multi-beam optical pickup apparatus according to claim 1, wherein said light receiving unit (10) comprises

a focus error detection light receiving unit (12) arranged divisionally so that reflected light of said zero order light beam is focused on a divisional line when said distance between said objective lens and said optical information recording medium is equal to said best image point distance of said zero order light beam, and

a radial frequency light receiving unit receiving (14) reflected light of said plurality of light beams to detect a radial frequency signal, wherein said control unit is connected to said focus error detection light receiving unit (12), and applies an offset voltage to a signal from said focus error detection light receiving unit (12) to control the position of said objective lens (5) so that said distance between said objective Lens (5) and said optical information recording medium (6) is deviated from said best image point distance of said zero order light bean.

3. The multi-beam optical pickup apparatus according to claim 1, wherein said light receiving unit (29, 30, 31) comprises

a focus error detection light receiving unit (30) arranged divisionally so that reflected light of said zero order light beam is not focused on a divisional line when said distance between said objective lens (5) and said optical information recording medium (6) is equal to said best image point distance of said zero order light beam, and

a radial frequency light receiving unit (31) receiving reflected light of said plurality of light beams to detect a radial frequency signal, wherein said control unit is connected to said focus error detection light receiving unit (30), and controls the position of said objective (5) lens so that said distance between said objective lens (5) and said optical information recording medium (6) is deviated from said best image point distance of said zero order light beam according to a signal from said focus error detection light receiving unit (30).

4. The multi-beam optical pickup apparatus according to claim 1, wherein said light receiving unit (29, 30, 31) comprises

a first focus error detection light receiving unit (30) detecting at least one focus error out of reflected light of a light beam other than said zero order light beam, and

a radial frequency light receiving unit (31) receiving reflected light of said plurality of light beams to detect a radial frequency signal, wherein said control unit is connected to said first focus error detection light receiving unit (30), and controls the position of said objective lens (5) so that said distance between said objective lens (5) and said optical information recording medium (6) is equal to a best image point distance of any light beam corresponding to the reflected light received at said first focus error detection light receiving unit (30) according to a signal from said first focus error detection light receiving unit (30).

5. The multi-beam optical pickup apparatus according to claim 4, wherein said first focus error detection light receiving unit (30) includes a second focus error detection light receiving unit (30) detecting focus error of a light beam lower by one order than the highest order, wherein said control unit is connected to said second focus error detection light receiving unit (30), and controls the position of said objective lens (5) so that said distance between said objective lens (5) and said optical information recording medium (6) is equal to a best image point distance of a light beam lower by one order than the highest order according to a signal from said second focus error detection light receiving unit (30).

6. A focus control method employed in a multi-beam optical pickup apparatus including a light source (7); a diffraction element (8, 9, 28) diffracting light emitted from the light source (7) towards an optical information recording medium (6) to produce a plurality of light beams; objective lens (5) focusing said plurality of light beams on said optical information recording medium (6); a light receiving unit (10, 29, 30, 31) receiving reflected light of said plurality of light beams from said optical information recording medium (6); and a control unit connected to said light receiving unit to control a position of said objective lens (5) according to a signal from said light receiving unit (10, 29, 30, 31), said focus control method comprising the steps of:

receiving reflected light of said plurality of beams from said optical information recording medium (6), and

controlling the position of said objective lens (5) so that a distance between said optical information recording medium (6) and said objective lens (5) is at least the shorter one of a best image point distance of a light beam having a diffraction order of zero and a best image point distance of a light beam having the highest diffraction order and not more than the longer one of said best image point distance of a light beam having a diffraction order of zero and said best image point distance of a light beam having the highest diffraction order according to a signal from said light receiving unit (10, 29, 30, 31).

7. The focus control method according to claim 6, wherein said light receiving unit comprises

a focus error detection light receiving unit (12) arranged divisionally so that reflected light of said zero order light beam is focused on a divisional line when said distance between said objective lens and said optical information recording medium is equal to said best image point distance of said zero order light beam, and

a radial frequency light receiving unit (14) receiving reflected light of said plurality of light beams to detect a radial frequency signal,

wherein said step of controlling includes the step of applying an offset voltage to a signal from said focus error detection light receiving unit (12) to control the position of said objective lens (5) so that said distance between said objective lens (5) and said optical information recording medium (6) is deviated from said best image point distance of said zero order light beam.

8. The focus control method according to claim 6, wherein said light receiving unit (29, 30, 31) comprises

a focus error detection light receiving unit (30) arranged divisionally so that reflected light of said zero order light beam is not focused on a divisional line when said distance between said objective lens (5) and said optical information recording medium (6) is equal to said best image point distance of said zero order light beam, and

a radial frequency light receiving unit (31) receiving reflected light of said plurality of light beams to detect a radial frequency signal,

wherein said step of controlling includes the step of controlling the position of said objective lens (5) so that said distance between said objective lens (5) and said optical information recording medium (6) is deviated from said best image point distance of said zero order light beam according to a signal from said focus error detection light receiving unit (30).

9. The focus control method according to claim 6, wherein said light receiving unit (29, 30, 31) comprises

a first focus error detection light receiving unit (30) detecting at least one focus error out of reflected light of a light beam other than said zero order light beam, and

a radial frequency light receiving unit (31) receiving reflected light of said plurality of light beams to detect a radial frequency signal,

wherein said step of receiving light includes the step of detecting at least one focus error out of reflected light of a light beam other than said zero order light beam,

wherein said step of controlling includes the step of controlling the position of said objective lens (5) so that said distance between said objective lens (5) and said optical information recording medium (6) is equal to a best image point distance of any light beam corresponding to the reflected light received at said first focus error detection light receiving unit (30) according to a signal from said first focus error detection light receiving unit (30).

10. The focus control method according to claim 9, wherein said first focus error detection light receiving unit (30) includes a second focus error detection light receiving unit (30) detecting focus error of a light beam lower by one order than the highest order.

wherein said step of detecting includes the step of detecting focus error of a light beam lower by one order than the highest order,

wherein said step of controlling according to a signal from said first focus error detection light receiving unit (30) includes the step of controlling the position of said objective lens (5) so that said distance between said objective lens (5) and said optical information recording medium (6) is equal to a best image point distance of a light beam lower by one order than the highest order according to a signal from said second focus error detection light receiving unit (30).

*FIG.1*

*FIG.2*

## FIG.3

TRACK DIRECTION

9C

9A

9B

## FIG.4A

## FIG.4B

## FIG.4C

## FIG.5

VOLTAGE

FAR SIDE

NEAR SIDE

DEFOCUS

## FIG.6

BEST IMAGE POINT POSITION
OF EACH BEAM

BEST IMAGE POINT
POSITION ( μm)

## FIG.7

WAVE ABERRATION OF EACH BEAM

r. m. s. VALUE
OF WAVE
ABERRATION
( λ )

## FIG.8

FOCUS SHIFT
AMOUNT = 0.36 (μm)

↕ OFFSET
VOLTAGE
= 0.375 (V)

VOLTAGE

NEAR SIDE

FAR SIDE

DEFOCUS

## FIG.9

BEST IMAGE POINT POSITION
OF EACH BEAM

B2

B1

B0

-1    -0.5    0

BEST IMAGE POINT
POSITION (μm)

## FIG.10

**WAVE ABERRATION OF EACH BEAM**

r. m. s. VALUE OF WAVE ABERRATION ($\lambda$)

## FIG.11

FIG.12

29A  29B

31A  31B  30  31C  31D

FIG.13

TRACK DIRECTION

33

32

## FIG.14

WAVE ABERRATION OF EACH BEAM

r. m. s. VALUE
OF WAVE
ABERRATION
$(\lambda)$

## FIG.15

## FIG.16

## FIG.17

WAVE ABERRATION OF EACH BEAM

r. m. s. VALUE OF WAVE ABERRATION ($\lambda$)